**Europäisches Patentamt**

**European Patent Office**

**Office européen des brevets**

(11) Veröffentlichungsnummer: **0 241 649**
**B1**

## (12) EUROPÄISCHE PATENTSCHRIFT

(45) Veröffentlichungstag der Patentschrift:
**02.08.89**

(21) Anmeldenummer: **87101228.2**

(22) Anmeldetag: **29.01.87**

(51) Int. Cl.⁴: **G 01 G 7/06,** G 01 G 7/04,
G 01 G 1/18, G 01 D 5/24

(54) Kapazitiver Positionsdetektor an einer elektromagnetisch kraftkompensierenden Waage.

(30) Priorität: **15.04.86 CH 1493/86**

(43) Veröffentlichungstag der Anmeldung:
**21.10.87 Patentblatt 87/43**

(45) Bekanntmachung des Hinweises auf die Patenterteilung:
**02.08.89 Patentblatt 89/31**

(84) Benannte Vertragsstaaten:
**DE FR GB IT**

(56) Entgegenhaltungen:
**EP-A-0 039 249**
**DE-A-3 012 979**
**DE-A-3 410 955**
**US-A-3 685 604**

(73) Patentinhaber: **Mettler Instrumente AG, Im
Langacher, CH- 8606 Greifensee (CH)**

(72) Erfinder: **Kunz, Peter, Saumstrasse 28, CH- 8625
Gossau (CH)**

## Beschreibung

Die Erfindung betrifft einen kapazitiven Positionsdetektor an einer elektromagnetisch kraftkompensierenden Waage zur Erfassung ihrer Gleichgewichtslage, mit in variablem Abstand relativ zueinander beweglichen Flächenelektroden.

Kapazitive Positionsdetektoren der genannten Art an elektromagnetisch kraftkompensierenden Waagen sind an sich bekannt (z. B. US-A-3 133 606, 3 604 525 und 3 685 604). Das Detektorelement arbeitet bei bekannten Lösungen als Differentialkondensator, wobei das Kapazitätsverhältnis oder die Kapazitätsdifferenz ein Mass für die Position eines unter Last beweglichen Teils (Balken) der Waage inbezug auf einen ortsfesten Waagenteil (Ständer) bildet. In der Nullage bzw. im Gleichgewichtszustand der Waage ist das Kapazitätsverhältnis gleich Eins bzw. die Kapazitätsdifferenz gleich Null. Bei jeder Abweichung von der Nullage wird aufgrund der dadurch bewirkten Kapazitätsänderung der Kompensationsstrom der Waage nachgeregelt, bis die Nullage wieder erreicht ist.

Zur Erfassung der Kapazitätsänderung dient beispielsweise eine Wechselstrombrücke mit einem phasenselektiven Gleichrichter im Nullzweig (US-A 3 133 606). Der Differentialkondensator kann zusammen mit zwei Festkondensatoren eine vollständige Brückenschaltung bilden (US-A 3 604 525), was den Vorteil hat, dass die beiden Aussenelektroden des Differentialkondensators auf gleichem Potential, vorzugsweise auf Massepotential liegen und durch Teile des beweglichen Waagenteils, z. B. eines metallischen Waagebalkens, gebildet sein können (US-A 3 685 604), wodurch die sonst erforderlichen beweglichen Verbindungen zu isoliert anzubringenden Aussenelektroden entfallen.

Die bisher bekannt gewordenen Bauformen kapazitiver Positionsdetektoren der eingangs genannten Art, die einen Differentialkondensator mit am Waagebalken befindlichen Aussenelektroden als Detektorelement aufweisen, haben jedoch verschiedene Nachteile inbezug auf ihre mechanischen und elektrischen Eigenschaften.

Ein Nachteil ist bedingt durch den Umstand, dass die beweglichen Aussenelektroden des Differentialkondensators dessen ortsfeste, voneinander isolierte Innenelektroden naturgemäss räumlich umfassen. Es ist deshalb praktisch unumgänglich, den beweglichen Teil des Positionsdetektors aus mehreren Teilen aufzubauen, was die Montage und Demontage des Waagebalkens am Ständer der Waage erschwert und einen zusätzlichen Arbeitsschritt für die Montage der Aussenelektroden am Waagebalken nötig macht.

Zur Sicherung der Waage gegen Ueberlastung, insbesondere zur Verhinderung einer Ueberbeanspruchung der Biegelager von mit solchen ausgerüsteten Waagen, sind üblicherweise Anschläge vorgesehen, welche die Bewegung des Waagebalkens beidseitig begrenzen. Bis dahin war es notwendig, diese Anschläge verstellbar zu gestalten, weil sich die Nullage des Waagebalkens in bezug auf den Ständer der Waage innerhalb einer Baureihe von Waage zu Waage in verschiedenen Höhenlagen befinden kann und in diesem Fall die Anschläge bei jeder Waage justiert werden müssen. Dieser Nachteil ist einerseits darauf zurückzuführen, dass in der Herstellung und beim Zusammenbau des Positionsdetektors, z.T. bedingt durch den mehrteiligen Aufbau desselben, Abweichungen der einzelnen Kapazitäten von ihren Nennwerten auftreten. Andererseits können die elektrischen Verbindungen zwischen dem Differentialkondensator und der normalerweise getrennt von diesem angeordneten Auswerteelektronik Streukapazitäten mit von Waage zu Waage unterschiedlichem Einfluss auf das Brückengleichgewicht bilden.

Ausserdem können durch den Antenneneffekt hochfrequente Störsignale in die Auswerteschaltung gelangen, wenn diese Verbindungen nicht in geeigneter Weise abgeschirmt sind.

Die Erfindung bezweckt die Schaffung eines kapazitiven Positionsdetektors, der unter Vermeidung der genannten Nachteile einen einfacheren mechanischen Aufbau und eine präzisere Arbeitsweise ermöglicht.

Der Positionsdetektor nach der Erfindung ist dadurch gekennzeichnet, dass ein ortsfester Bauteil und ein unter der Einwirkung der Last beweglicher Bauteil der Waage eine ortsfeste und eine bewegliche Flächenelektrode bilden, die beide auf Massepotential liegen, dass zwischen der ortsfesten und der beweglichen Flächenelektrode vier weitere ortsfeste Flächenelektroden angeordnet sind, die paarweise nebeneinander liegen und zusammen mit den äusseren Flächenelektroden zwei Reihen hintereinander geschalteter Kondensatoren bilden, dass die der beweglichen Flächenelektrode am nächsten liegenden zwei Kondensatoren der einen Reihe und die der äusseren ortsfesten Flächenelektrode am nächsten liegenden zwei Kondensatoren der anderen Reihe je einen kapazitiven Spannungsteiler bilden, und dass die beiden Spannungsteiler zu einer Brücke geschaltet und mit einer gemeinsamen Wechselstromquelle verbunden sind, wobei die Differenz der auf Massepotential bezogenen Spannungen an den Mittelpunkten der beiden Spannungsteiler als Mass für die Lageabweichung des beweglichen Bauteils der Waage aus der Gleichgewichtslage dient.

Der erfindungsgemässe Positionsdetektor arbeitet wie bekannte Ausführungen mit vier Kondensatoren in Brückenschaltung. Von diesen vier Kondensatoren ist aber nur ein Kondensator variabel, im Gegensatz zu den Anordnungen mit einem Differentialkondensator, der zwei gegensinnig veränderliche Kondensatoren darstellt. Die durch diese Vereinfachung in kauf genommene Empfindlichkeitseinbusse lässt sich durch eine entsprechende Signalverstärkung problemlos ausgleichen. Der damit verbundene Vorteil besteht jedoch darin, dass nur eine einzige bewegliche Flächenelektrode vorhanden ist, die in einfacher Weise durch ein Fächenelement am Waagebalken gebildet werden kann. Die bewegliche Flächenelektrode befindet sich an der Aussenseite der Kondensatoranordnung, so dass ein entsprechend ausgebildeter Waagebalken ohne Behinderung durch die ortsfesten Flächenelektroden montiert und demontiert werden kann. Für den beweglichen Teil des Positionsdetektors sind keine weiteren Bau- und Befestigungsteile erforderlich; somit entfällt auch eine diesbezügliche Montage. Ausserdem beansprucht der bewegliche Teil des Positionsdetektors im Gegensatz zu demjenigen bei einem Differentialkondensator keinen zusätzlichen Bewegungsraum, wodurch sich eine geringere Bauhöhe des Positionsdetektors erreichen lässt.

Alle schaltungsbedingten Anschlüsse des Positionsdetektors befinden sich an ortsfesten Flächenelektroden, so dass bewegliche elektrische Verbindungen entfallen. Die inneren vier Flächenelektroden sind vorzugsweise durch elektrisch leitende Beläge an beiden Seiten eines plattenförmigen Schaltungsträgers gebildet, welcher am ortsfesten Teil der Waage mit Abstand montiert ist. Die äussere ortsfeste Flächenelektrode kann in einfacher Weise ein gegenüber der Montageebene des Schaltungsträgers zurückgesetztes Flächenelement des Waagenständers sein. Damit werden für die Montage des Schaltungsträgers ausser Befestigungselementen (z. B. Schrauben) keine zusätzlichen Bauteile benötigt.

Mit Vorteil ist auf dem plattenförmigen Schaltungsträger wenigstens jener Teil der elektronischen Schaltungsanordnung der Waage plaziert, der die Schaltungsmittel zur Erfassung der Kapazitätsänderung und zur Erzeugung eines die Abweichung von der Nullage kennzeichnenden Fehlersignals umfasst. Dadurch lassen sich die elektrischen Verbindungen von den ortsfesten Flächenelektroden zu den genannten Schaltungsmitteln sehr kurz halten, wodurch die Empfindlichkeit der ganzen Messanordnung gegen äussere Störsignale erheblich vermindert werden kann. Die elektronische Schaltungsanordnung kann in Form einer gedruckten Schaltung ausgeführt sein. Dies ermöglicht es, den Positionsdetektor auf einfache Weise in die Schaltungsanordnung zu integrieren, womit eine weitere Vereinfachung in der Herstellung desselben erreichbar ist.

Ein Positionsdetektor mit den beschriebenen baulichen Merkmalen ist gegenüber bisherigen Lösungen präziser herstellbar und einfacher zu montieren. Deshalb sind bezüglich der Nullage des Waagebalkens nur sehr geringe Abweichungen von Waage zu Waage innerhalb einer Baureihe zu erwarten. Unter diesen Umständen ist eine Justierung der Balkenanschläge entbehrlich, d.h. es können feste Anschläge vorgesehen werden. Die Anzahl der für den Auf- und Einbau des Positionsdetektors benötigten Baukomponenten ist verhältnismässig gering, was im Hinblick auf Herstellung, Lagerhaltung, Montage und Service weniger Aufwand bedeutet.

In der Zeichnung sind Ausführungsbeispiele der Erfindung dargestellt, und zwar zeigen:

Fig. 1 eine schematische Darstellung einer elektromagnetisch kraftkompensierenden Waage,

Fig. 2 und 3 Frontansicht und Längsschnitt eines Positionsdetektors gemäss einer ersten Ausführungsform der Erfindung,

Fig. 4 Schaltbild des Positionsdetektors nach den Fig. 2 und 3,

Fig. 5 Schaltungsanordnung zur Erzeugung des Fehlersignals mit einem Positionsdetektor nach den Fig. 2 und 3,

Fig. 6 Frontansicht eines Positionsdetektors gemäss einer zweiten Ausführungsform der Erfindung,

Fig. 7 Schaltbild des Positionsdetektors nach Fig. 6,

Fig. 8 Verbindung des Positionsdetektors nach Fig. 6 mit einer Auswerteeinrichtung zur Erzeugung des Fehlersignals, und

Fig. 9 Schaltungsanordnung der Auswerteeinrichung.

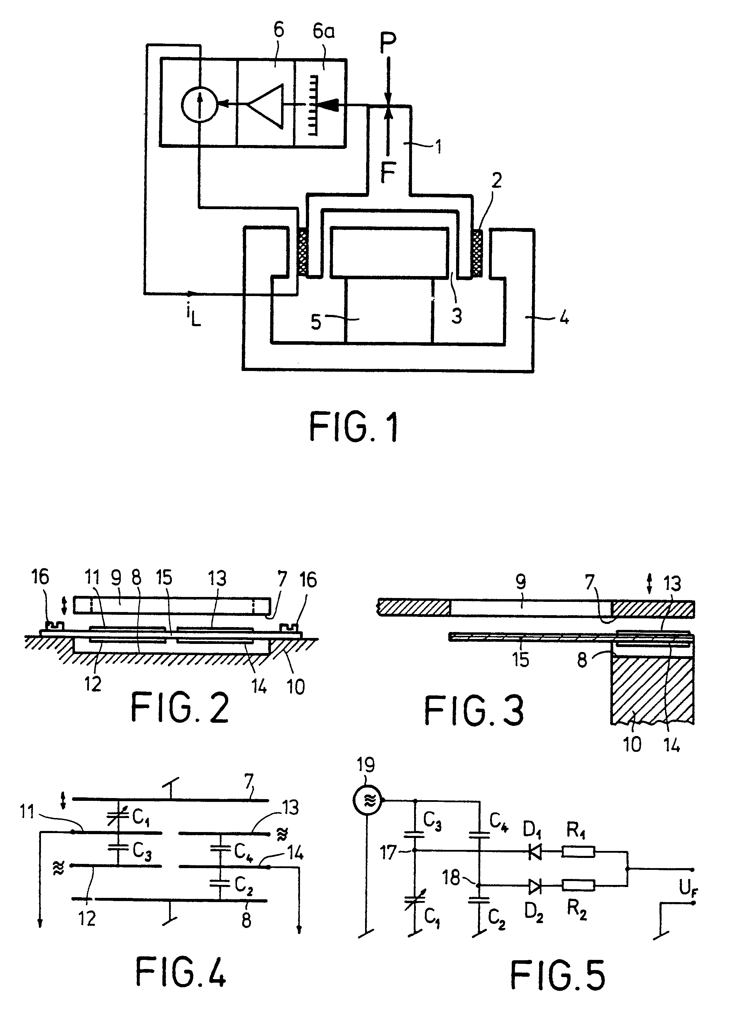

Gemäss Fig. 1 besitzt die Waage einen Lastaufnehmer 1, auf den die Kraft P einwirkt, welche dem Gewicht des Wägegutes entspricht. Der Lastaufnehmer 1 trägt eine Spule 2, die im Luftspalt 3 eines Permanentmagnetsystems 4 mit dem Permanentmagneten 5 angeordnet ist.

Durch die Lastwicklung der Spule 2 fliesst ein Kompensationsstrom $i_L$ der im Magnetfeld des Permanentmagnetsystems 4 eine Kraft F erzeugt, welche der Kraft P entgegenwirkt. Durch eine Regeleinrichtung 6, welche einen Positionsdetektor 6a zur Erfassung der Position des Lastaufnehmers aufweist, wird der Kompensationsstrom $i_L$ geregelt, dass die diesem proportionale Kraft F die Waage im Gleichgewicht hält und die Stärke des Kompensationsstromes $i_L$ somit ein Mass für die Kraft P bzw. für das Gewicht des Wägegutes darstellt.

Der kapazitive Positionsdetektor nach den Fig. 2 und 3 besitzt eine bewegliche Flächenelektrode 7 und eine ortsfeste Flächenelektrode 8, die einander mit variablem Abstand gegenüberliegen. Die bewegliche Flächenelektrode 7 wird durch ein Flächenelement eines unter der Einwirkung der Last beweglichen Bauteils der Waage, z. B. eines Waagebalkens 9 gebildet, während die ortsfeste Flächenelektrode 8 durch ein Flächenelement eines ortsfesten Bauteils der Waage, z. B. des Ständers 10 gebildet wird. Beide Flächenelektroden 7 und 8 befinden sich auf Massepotential, was bei metallischer Ausführung der Waagenbauteile naturgemäss zutrifft. Zwischen den genannten beiden Flächenelektroden 7 und 8 sind vier weitere ortsfeste Flächenelektroden 11, 12, 13 und 14 angeordnet, welche paarweise nebeneinander liegen und durch elektrisch leitende Beläge an beiden Seiten eines plattenförmigen Schaltungsträgers 15 gebildet sind. Der Schaltungsträger 15, der als Dielektrikum zwischen den Flächenelektroden 11 und 12 bzw. 13 und 14 dient, ist am Ständer 10 mittels Schrauben 16 montiert, so dass er im Bereich der Flächenelektroden einen Abstand gegenüber dem Ständer 10 aufweist.

Die inneren vier Flächenelektroden 11, 12, 13 und 14 bilden zusammen mit den beiden äusseren Flächenelektroden gemäss Fig. 4 zwei Reihen hintereinander geschalteter Kondensatoren. Die der beweglichen Flächenelektrode 7 am nächsten liegenden zwei Kondensatoren $C_1$ und $C_3$ der einen Reihe und die der äusseren ortsfesten Flächenelektrode 8 am nächsten liegenden zwei Kondensatoren $C_2$ und $C_4$ der anderen Reihe bilden je einen kapazitiven Spannungsteiler, wobei von diesen Kondensatoren nur der Kondensator $C_1$ eine veränderliche Kapazität aufweist, und zwar nach Massgabe der Position des Waagebalkens 9 gegenüber dem Schaltungsträger 15.

Die beiden kapazitiven Spannungsteiler $C_1$, $C_3$ und $C_2$, $C_4$ sind gemäss Fig. 5 zu einer Brücke geschaltet und mit einer gemeinsamen Wechselstromquelle 19 verbunden. Als Wechselstromquelle kann ein einfacher Hochfrequenzoszillator vorgesehen sein oder ein in der elektronischen Ausrüstung der Waage vorhandener Taktgeber benützt werden. Als Mass für die Lageabweichung des Waagebalkens 9 aus der Gleichgewichtslage dient die Differenz der auf Massepotential bezogenen Spannungen an den Mittelpunkten 17 und 18 der beiden Spannungsteiler. Diese Mittelpunkte 17 und 18 sind mit zwei verschieden gepolten Dioden $D_1$ bzw. $D_2$ verbunden, an deren Ausgang eine Summierschaltung aus den beiden Widerständen $R_1$ und $R_2$ angeschlossen ist, welche das Fehlersignal $U_F$ für die Regelung des Kompensationsstromes $i_L$ der Waage liefert.

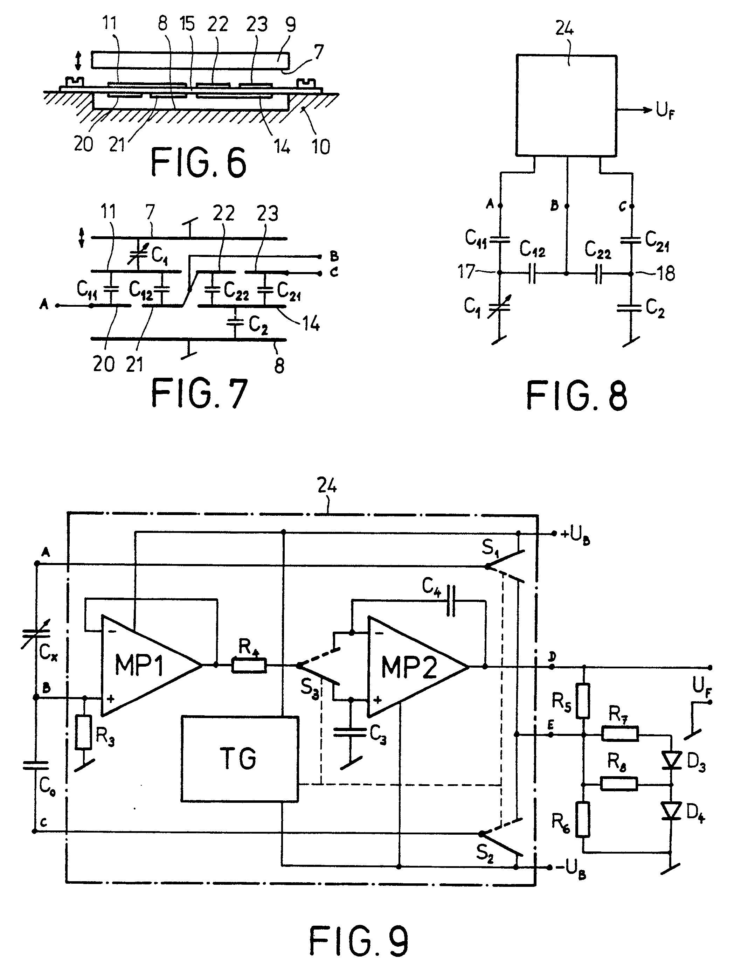

Der kapazitive Positionsdetektor nach Fig. 6 ist im Prinzip gleich aufgebaut wie derjenige nach den Fig. 2 und 3. Der Unterschied besteht darin, dass die bisherigen Flächenelektroden 12 und 13 je durch zwei nebeneinanderliegende Flächenelektroden 20 und 21 bzw. 22 und 23 ersetzt und von diesen die Flächenelektroden 21 und 22 intern miteinander verbunden sind. Die beiden kapazitiven Spannungsteiler werden nunmehr gemäss Fig. 7 durch die Kondensatoren $C_1$ und $C_{11}$ bzw. $C_2$ und $C_{21}$ gebildet, und die Mittelpunkte 17 und 18 der beiden Spannungsteiler sind gemäss Fig. 8 durch einen dritten kapazitiven Spannungsteiler $C_{12}$, $C_{22}$ miteinander verbunden. An die Anschlüsse A und C in Fig. 7 wird die Wechselstromquelle angeschlossen, während der Anschluss B mit einer phasenselektiven Gleichrichterschaltung verbunden wird, welche das Fehlersignal $U_F$ für die Regelung des Kompensationsstromes $i_L$ der Waage liefert.

Die Summierung der Spannungen an den Mittelpunkten 17, 18 der beiden Spannungsteiler $C_1$, $C_{11}$ und $C_2$, $C_{21}$ erfolgt in diesem Ausführungsbeispiel nicht gleich-, sondern wechselstromseitig. Damit entfallen die beiden Dioden $D_1$, $D_2$ nach Fig. 5, deren Temperaturgleichlauf schwieriger zu erreichen ist als derjenige zweier Festkondensatoren.

Eine praktische Ausführungsform der Schaltung des Positionsdetektors nach Fig. 7 in Verbindung mit einer Auswerteeinrichtung für die Erzeugung des Fehlersignals $U_F$ ist in den Fig. 8 und 9 dargestellt, wobei die Fig. 8 die Verbindung der aus den Kondensatoren des Positionsdetektors gebildeten Brückenschaltung mit der Auswerteeinrichtung 24 zeigt, während die Fig. 9 die Schaltungsanordnung der Auswerteeinrichtung 24 veranschaulicht. In Fig. 9 ist die Kondensator-Brückenschaltung mit den Anschlüssen A, B und C in vereinfachender Weise durch einen Kondensator $C_X$ variabler Kapazität zwischen den Anschlüssen A und B und einen Konsensator $C_O$ fester Kapazität zwischen den Anschlüssen B und C ersetzt.

Zum Betrieb der Auswerteeinrichtung 24 dienen zwei massesymmetrische Gleichspannungen $+U_B$ und $-U_B$. Für die Speisung der Kondensatoren $C_X$ und $C_O$ werden diese Gleichspannungen durch zwei periodisch betätigte elektronische Umschalter $S_1$ und $S_2$ zerhackt. Die Spannung am Mittelpunkt B der Kondensatoranordnung wird einem ersten Operationsverstärker MP1 zugeführt, der als Impedanzwandler mit hohem Eingangswiderstand arbeitet und dessen Arbeitspunkt durch den Widerstand $R_3$ an seinem nichtinvertierenden Eingang festgelegt ist. Die phasenselektive Gleichrichterschaltung umfasst einen mit den Kondensatoren $C_3$ und $C_4$ als Doppelintegrator geschalteten zweiten operationsverstärker MP2 und einen dritten elektronischen Umschalter $S_3$, über den das vom ersten Operationsverstärker MP1 gelieferte, durch einen Widerstand $R_4$ angekoppelte Signal abwechselnd den beiden Eingängen des zweiten Operationsverstärkers MP2 zugeführt wird. Die Steuersignaleingänge aller drei Umschalter $S_1$, $S_2$ und $S_3$ sind an einen gemeinsamen Taktgeber TG angeschlossen, dessen Taktfrequenz beispielsweise 30 kHz beträgt. Am Ausgang des Operationsverstärkers MP2 entsteht das Fehlersignal $U_F$ in Form einer Gleichspannung, welche z. B. bei $C_X < C_O$ positiv und bei $C_X/C_O$ negativ ist. Die erreichbare absolute Grösse des Fehlersignals $U_F$ in Funktion der Änderung des Kapazitätsverhältnisses $C_X/C_O$ hängt ab vom Grad der Rückkopplung, welche durch die Verbindung zwischen den Anschlusspunkten D und E am Ausgang der Auswerteeinrichtung 24 erzielt wird. Im vorliegenden Fall wird mit Hilfe des Spannungteilers $R_5$, $R_6$ ein Teil des Fehlersignals $U_F$ rückgekoppelt. Eine stärkere Rückkopplung, z. B. eine direkte Verbindung zwischen den Ausschlusspunkten D und E, vermindert das Fehlersignal $U_F$ und umgekehrt.

Das Mass der Spannungsänderung am Ausgang der Auswerteeinrichtung 24 in Funktion einer Abweichung der Position des Waagebalkens 9 von der Nullage hängt davon ab, in welcher Richtung die Positionsabweichung erfolgt, d.h. ob der Abstand zwischen den Flächenelektroden des Kondensators $C_X$ verkleinert oder vergrössert wird. Bei Vergrösserung des Elektrodenabstandes nimmt die Fehlerspannung UF verhältnismässig langsamer zu als bei einer entsprechenden Verminderung desselben. Um einen übereinstimmenden Spannungsverlauf und damit in der Regelung des Kompensationsstromes $i_L$ die gleiche Regelgeschwindigkeit bei positiver und negativer Positionsabweichung zu erzielen, ist im erwähnten Rückkopplungszweig ein von der Richtung der Fehlerspannung $U_F$ abhängiges nichtlineares Netzwerk vorgesehen, das im vorliegenden Beispiel mit dem Anschluss-Punkt E verbunden ist und aus den Dioden $D_3$ und $D_4$ und den Widerständen $R_7$ und $R_8$ besteht.

Vorzugsweise ist auf dem plattenförmigen Schaltungsträger 15 (Fig. 3) neben den Flächenelektroden 11, 12, 13 und 14 wenigstens jener Teil der elektronischen Ausrüstung der Waage plaziert, der zum Positionsdetektor gehört, der also die Schaltungsmittel zur Erfassung der Kapazitätsänderung und zur Erzeugung eines die Abweichung von der Nullage kennzeichnenden Fehlersignals umfasst. Eine in elektrischer Hinsicht besonders günstige Lösung besteht darin, die gesamte Regeleinrichtung 6 (Fig. 1) der Waage auf dem gleichen Schaltungsträger 15 anzuordnen. Damit lassen sich die eingangs genannten Fehlerquellen, welche durch die sonst vorhandenden Zwischenleitungen gegeben sind, weiter vermindern.

**Patentansprüche**

1. Kapazitiver Positionsdetektor an einer elektromagnetisch kraftkompensierenden Waage zur Erfassung ihrer Gleichgewichtslage, mit in variablem Abstand relativ zueinander beweglichen Flächenelektroden, dadurch gekennzeichnet, dass ein ortsfester Bauteil (10) und ein unter der Einwirkung der Last beweglicher Bauteil (9) der Waage eine ortsfeste und eine bewegliche Flächenelektrode (8 bzw. 7) bilden, die beide auf Massepotential liegen, dass zwischen der ortsfesten und der beweglichen Flächenelektrode vier weitere ortsfeste Flächenelektroden (11, 12, 13, 14) angeordnet sind, die paarweise nebeneinander liegen und zusammen mit den äusseren Flächenelektroden (7, 8) zwei Reihen hintereinander geschalteter Kondensatoren bilden, dass die der beweglichen Flächenelektrode (7) am nächsten liegenden zwei Kondensatoren ($C_1$, $C_3$) der einen Reihe und die der äusseren ortsfesten Flächenelektrode (8) am nächsten liegenden zwei Kondensatoren ($C_2$, $C_4$) der anderen Reihe je einen kapazitiven Spannungsteiler bilden, und dass die beiden Spannungsteiler zu einer Brücke geschaltet und mit einer gemeinsamen Wechselstromquelle (19) verbunden sind, wobei die Differenz der auf Massepotential bezogenen Spannungen an den Mittelpunkten (17, 18) der beiden Spannungsteiler als Mass für die Lageabweichung des beweglichen Bauteils (9) der Waage aus der Gleichgewichtslage dient.

2. Kapazitiver Positionsdetektor nach Anspruch 1, dadurch gekennzeichnet, dass die Mittelpunkte (17, 18) der beiden Spannungsteiler mit zwei verschieden gepolten Gleichrichtern ($D_1$, $D_2$) verbunden sind, an deren Ausgang eine Summierschaltung ($R_1$, $R_2$) angeschlossen ist, welche das Fehlersignal ($U_F$) für die Regelung des Kompensationsstromes ($i_L$) der Waage liefert.

3. Kapazitiver Positionsdetektor nach Anspruch 1, dadurch gekennzeichnet, dass die Mittelpunkte (17, 18) der beiden Spannungsteiler durch einen dritten kapazitiven Spannungsteiler ($C_{12}$, $C_{22}$) miteinander verbunden sind, dessen Mittelpunkt (B) an eine phasenselektive Gleichrichterschaltung angeschlossen ist, welche das Fehlersignal ($U_F$) für die Regelung des Kompensationsstromes ($i_L$) der Waage liefert.

4. Kapazitiver Positionsdetektor nach Anspruch 1, dadurch gekennzeichnet, dass die inneren vier Flächenelektroden (11, 12, 13, 14) durch elektrisch leitende Beläge an beiden Seiten eines plattenförmigen Schaltungsträgers (15) gebildet sind, welcher am ortsfesten Bauteil (10) der Waage mit Abstand montiert ist.

5. Kapazitiver Positionsdetektor nach den Ansprüchen 3 und 4, dadurch gekennzeichnet, dass die den dritten kapazitiven Spannungsteiler bildenden Kondensatoren ($C_{12}$, $C_{22}$) ebenfalls durch elektrisch leitende Beläge an beiden Seiten des plattenförmigen Schaltungsträgers (15) gebildet sind.

6. Kapazitiver Positionsdetektor nach Anspruch 4, dadurch gekennzeichnet, dass auf dem plattenförmigen Schaltungsträger (15) wenigstens jener Teil der elektronischen Ausrüstung der Waage plaziert ist, der die Schaltungsmittel zur Erfassung der Kapazitätsänderung und zur Erzeugung eines die Abweichung von der Nullage kennzeichnenden Fehlersignals ($U_F$) umfasst.

7. Kapazitiver Positionsdetektor nach Anspruch 3, dadurch gekennzeichnet, dass ein zwei elektronische Umschalter ($S_1$, $S_2$) umfassender Zerhacker zur Erzeugung der für die Speisung der kapazitiven Brückenschaltung ($C_X$, $C_O$) erforderlichen Wechselspannung aus einer Gleichspannungsquelle ($+U_B$, $-U_B$) vorgesehen ist und dass die phasenselektive Gleichrichterschaltung einen als Doppelintegrator geschalteten Operationsverstärker (MP2) und einen dritten elektronischen Umschalter ($S_3$) aufweist, über den das von der Brückenschaltung gelieferte Signal abwechselnd den beiden Verstärkereingängen zugeführt wird, wobei die Steuersignaleingänge aller drei Umschalter ($S_1$, $S_2$, $S_3$) an einen gemeinsamen Taktgeber (TG) angeschlossen sind.

8. Kapazitiver Positionsdetektor nach Anspruch 7, dadurch gekennzeichnet, dass Mittel ($D_3$, $D_4$, $R_7$, $R_8$) zur richtungsabhängigen Korrektur von Ungleichheiten im Verlauf des Fehlersignals bei positiver und negativer Positionsabweichung vorgesehen sind.

## Claims

1. A capacitive position detector on a weighing machine with electromagnetic force compensation, for detecting the equilibrium position thereof, comprising surface electrodes which are movable at variable spacings relative to each other characterised in that a stationary component (10) of the weighing machine and a component (9) of the weighing machine, which is movable under the effect of the load, from a stationary and a movable surface electrode (8 and 7 respectively) which are both at ground potential, that arranged between the stationary and the movable surface electrodes are four further stationary surface electrodes (11, 12, 13, 14) which are disposed in pairs in juxtaposed relationship and which together with the outer surface electrodes (7, 8) form two series of capacitors which are connected in succession, that the two capacitors ($C_1$, $C_3$) of the one series, which are not closely adjacent to the movable surface electrode (7), and the two capacitors ($C_2$, $C_4$) of the other series, which are most closely adjacent to the outer stationary surface electrode (8), respectively form capacitive voltage dividers, and that the two voltage dividers are connected into a bridge and are connected to a common alternating current source (19), wherein the difference of the voltages with respect to ground potential at the central points (17, 18) of the two voltage dividers serves as a measurement in respect of the deviation in position of the movable component (9) of the weighing machine the equilibrium position.

2. A capacitive position detector according to claim 1 characterised in that the central points (17, 18) of the two voltage dividers are connected to two differently poled rectifiers ($D_1$, $D_2$), to the outputs of which is connected a sumning circuit ($R_1$, $R_2$) which supplies the error signal ($U_F$) for regulation of the compensation current of the weighing machine.

3. A capacitive position detector according to claim 1 characterised in that the central points (17, 18) of the two voltage dividers are connected together by a third capacitive voltage divider ($C_{12}$, $C_{22}$), the central point (B) of which is connected to a phase-selective rectifier curcuit which supplies the error signal ($U_F$) for regulation of the compensation current ($i_L$) of the weighing machine.

4. A capacitive position detector according to claim 1 characterised in that the four inner surface electrodes (11, 12, 13, 14) are formed by electrically conductive coatings at both sides of a board-like circuit carrier (15) which is bunted at a spacing on the stationary component (10) of the weighing machine.

5. A capacitive position detector according to claim. 3 and 4 characterised in that the capacitors ($C_{12}$, $C_{22}$) forming the third capacitive voltage divider are also formed by electrically conductive coatings at both sides of the board-like circuit carrier (15).

6. A capacitive position detector according to claim 4 characterised in that positioned on the board-like circuit carrier (15) is at least that part of the electronic equipment of the weighing machine which includes the circuit means for detecting the variation in capacitance and for producing an error signal ($U_F$) which characterises the deviation from the zero position.

7. A capacitive position detector according to claim 3 characterised in that there is provided a chopper including two electronic change-over switches ($S_1$, $S_2$) for producing the ac voltage, which is required for feeding the capacitive bridge circuit ($C_X$, $C_O$), from a dc voltage source ($+U_B$, $-U_B$), and that the phase-selective rectifier circuit has an operational amplifier (MP2) connected as a double integrator, and a third electronic change-over switch ($S_3$) by way of which the signal supplied by the bridge circuit is fed alternately to the two amplifier inputs, wherein the control signal inputs of all three change-over switches ($S_1$, $S_2$, $S_3$) are connected to a can clock generator (TG).

8. A capacitive position detector according to claim 7 characterised in that there are provided means ($D_3$, $D_4$, $R_7$, $R_8$) for directionally dependent correction of inequalities in the configuration of the error signal in the event of positive and negative deviations in position.

## Revendications

1. Détecteur de positions capacitif équipant une balance à compensation de forces électromagnétique, en vue de détecter sa position d'équilibre, présentant des électrodes aplaties mobiles l'une par rapport à autre à une distance variable, caractérisé par le fait qu'une pièce constitutive fixe (10) de la balance et une pièce constitutive (9) de cette balance, mobile sous l'action de la charge, forment des électrodes aplaties (8 et respectivenent 7) respectivement fixe et mobile raccordées, l'une et l'autre, au potentiel de masse par le fait que quatre autres électrodes aplaties fixes (11, 12, 13, 14), intercalées entre les électrodes aplaties fixe et mobile, sont agencées en juxtaposition appariée et forment, en association avec les électrodes aplaties externes (7, 8), deux rangées de condensateurs branchés en série par le fait que les deux condensateurs ($C_1$, $C_3$) de l'une des rangées, les plus rapprocnés de l'électrode aplatie mobile (7), et les deux condensateurs ($C_2$, $C_4$) de l'autre rangée, les plus rapprochés de l'électrode aplatie fixe externe (8), forment chacun un diviseur de tension capacitif et par le fait que les deux diviseurs de tension sont branchés en un pont et sont raccordés à une source commune (19) de courant alternatif, la différence des tensions par rapport au potentiel de masse, aux points centraux (17, 18) des deux diviseurs de tension, servant de mesure pour l'écart de la pièce constitutive mobile (9) de la balance par rapport à la position d'équilibre.

2. Détecteur de positions capacitif selon la revendication 1, caractérisé par le fait que les points centraux (17, 18) des deux diviseurs de tension sont reliés à deux redresseurs ($D_1$, $D_2$) à polarités différentes, à la sortie desquel 5 est raccordé un circuit sommateur ($R_1$, $R_2$) qui délivre le signal d'erreur ($U_F$) pour le réglage du courant de compensation ($i_L$) de la balance.

3. Détecteur de positions capacitif selon la revendication 1, caractérisé par le fait que les points centraux (17, 18) des deux diviseurs de tension sont reliés l'un à l'autre par l'intermédiaire d'un troisième diviseur de tension capacitif ($C_{12}$, $C_{22}$) dont le point central (B) est raccordé à un circuit redresseur à sélection de phase qui délivre le signal d'erreur ($U_F$) pour le réglage du courant de compensation ($i_L$) de la balance.

4. Détecteur de positions capacitif selon la revendication 1, caractérisé par le fait que les quatre électrodes aplaties internes (11, 12, 13, 14) sont formées par des revêtements électriquement conducteurs, des deux côtés d'un porte-circuit (15) en forme de plaque monté, à distance, sur la pièce constitutive fixe (10) de la balance.

5. Détecteur de positions capacitif selon les revendications 3 et 4, caractérisé par le fait que les condensateurs ($C_{12}$, $C_{22}$) qui forment le troisième diviseur de tension capacitif sont formés, eux aussi, par des revêtements électriquement conducteurs des deux côtés du porte-circuit (15) en forme de plaque.

6. Détecteur de positions capacitif selon la revendication 4, caractérisé par le fait que, sur le porte-circuit (15) en forme de plaque, se trouve au moins la partie de l'équipement électronique de la balance qui englobe les moyens de commutation pour détecter la variation de capacité et pour engendrer un signal d'erreur ($U_F$) caractérisant l'écart par rapport à la position zéro.

7. Détecteur de positions capacitif selon la revendication 3, caractérisé par le fait qu'il est prévu un hacheur comprenant deux commutateurs électroniques ($S_1$, $S_1$) pour engendrer, à partir d'une source de tension continue ($+U_B$, $-U_B$), la tension alternative nécessaire à l'alimentation du circuit capacitif en pont ($C_X$, $C_O$) et par le fait que le circuit redresseur à sélection de phase renferme un amplificateur opérationnel (MP2) branché en tant qu'intégrateur double, ainsi qu'un troisième commutateur électronique ($S_3$) par l'intermédiaire duquel le signal, délivré par le circuit en pont, est alternativement appliqué aux deux entrées amplificatrices, les entrées à signaux de commande des trois commutateurs ($S_1$, $S_2$, $S_3$) étant toutes raccordées à un générateur de rythme commun (TG).

8. Détecteur de positions capacitif selon la revendication 7, caractérisé par le fait que des moyens ($D_3$, $D_4$, $R_7$, $R_8$) sont prévus pour la correction, en fonction de la direction, d'inégalités affectant l'allure du signal d'erreur en présence d'écarts de position positif et négatif.

FIG. 1

FIG. 2

FIG. 3

FIG.4

FIG.5

FIG.6

FIG.7

FIG.8

FIG.9